# EUROPÄISCHE PATENTSCHRIFT

(11) **EP 2 580 539 B1**
(45) Veröffentlichungstag und Bekanntmachung des Hinweises auf die Patenterteilung: **12.08.2015**
(21) Anmeldenummer: 11801550.2
(22) Anmeldetag: 09.06.2011
(51) Int. Cl.: F24J 2/52, H01L 31/042

(54) **TRAGPROFIL EINER REIHE VON PV-MODULEN**
PROFILED SUPPORT ELEMENT OF A ROW OF PV MODULES
PROFILÉ PORTEUR D'UNE SÉRIE DE MODULES PV

(30) Priorität: 09.06.2010 DE 102010023212
(43) Veröffentlichungstag der Anmeldung: 17.04.2013
(73) Patentinhaber: Schletter GmbH, 83527 Kirchdorf (DE)
(72) Erfinder: URBAN, Hans, 83527 Haag (DE)
(86) Internationale Anmeldenummer: PCT/DE2011/001337
(87) Internationale Veröffentlichungsnummer: WO 2012/041266

(56) Entgegenhaltungen:
- EP-A1- 1 961 977
- WO-A2-2009/030427
- WO-A2-2009/086241
- DE-A1-102008 008 253
- US-A1- 2003 111 103

## Beschreibung

Die Erfindung betrifft ein Tragprofil einer Reihe von PV-Modulen.

Ein derartiges Tragprofil trägt mehrere in einer Reihe geordnete Photovoltaik-Module, kurz PV-Module, und ist dazu praktisch Element einer Tragstruktur, die auf einem Dach oder auf einem freien Gelände angeordnet ist. Das Tragprofil kann einen elektrischen Leiter enthalten, der insbesondere zur Gleichstromübertragung zu einem Wechselrichter nutzbar ist.

Aus WO 2004/017424 A2 ist eine Befestigungseinrichtung für PV-Module bekannt. Diese umfasst hohle Profilleisten, in denen Stromschienen mit vergleichsweise geringem Querschnitt unterhalb einer Auflagefläche der Profilleisten befestigt sind.

Aus DE 20 2006 012 495 U1 ist ein Tragprofil für eine Reihe von PV-Modulen bekannt ohne elektrischen Leiter.

Aufgabe der Erfindung ist es, ein materialeffizientes Tragprofil zum Tragen einer Reihe von PV-Modulen zu schaffen, das einen integrierten elektrischen Leiter enthält. Der elektrische Leiter soll einen großen Materialquerschnitt aufweisen, jedoch durch sein Eigengewicht die Tragfähigkeit des Tragprofils nicht mindern.

Die Aufgabe wird mit dem in Anspruch 1 angegebenen Tragprofil einer Reihe von PV-Modulen gelöst. Demgemäß sind die PV-Module mittels des Tragprofils getragen, und das Tragprofil weist ein äußeres Hohlprofil, ein Isolatormittel und ein metallenes inneres Hohlprofil auf. Außerdem ist vorgesehen, dass das Isolatormittel das äußere Hohlprofil und das innere Hohlprofil voneinander elektrisch trennt, und das innere Hohlprofil mittels des Isolatormittels in dem äußeren Hohlprofil aufgenommen und mittels des Isolatormittels in allen Richtungen quer zum Tragprofil formschlüssig in dem äußeren Hohlprofil gehalten ist.

Das innere Hohlprofil ist demgemäß als isolierter elektrischer Leiter für Wechsel- und/oder Gleichstrom nutzbar und kann aufgrund seines Hohlquerschnitts besonders biegesteif ausgeführt sein. Da das innere Hohlprofil außerdem in allen Querrichtungen formschlüssig in dem äußeren Hohlprofil gehalten ist, ergänzen sich die Trageigenschaften des äußeren und inneren Hohlprofils in vorteilhafter Weise. Dadurch kann der Materialquerschnitt des inneren Hohlprofils sehr groß gestaltet sein, was sowohl elektrisch als auch strukturell von Vorteil ist. Außerdem kann das äußere Hohlprofil daher weniger tragfähig ausgeführt sein, als die aus dem Stand der Technik bekannte Profilleiste. Wegen des formschlüssigen Haltens kann sich das innere Hohlprofil in dem äußeren Hohlprofil in keiner Richtung quer zu dem Tragprofil bewegen. Es versteht sich, dass eine geeignet Formtoleranzen bestehen können, insbesondere Spielpassungen, wobei auch eine Untermaßpassungen denkbar sind.

Die bevorzugte Länge des Tragprofils beträgt zwischen 4 und 20 Meter, um eine Vielzahl von PV-Modulen in einer Reihe tragen zu können. Das äußere Hohlprofil und das innere Hohlprofil können eine im Wesentlichen gleiche Länge aufweisen. Zu mechanischen und elektrischen Verbindungszwecken kann es von Vorteil sein, wenn das innere Hohlprofil gegenüber dem äußeren Hohlprofil bezogen auf die Gesamtlänge unwesentlich an den Enden zurücksteht und/oder hervorsteht. Das Maß eines solchen Zurück- oder Hervorstehens beträgt vorzugsweise weniger als 10 cm oder weniger als 2 % der Gesamtlänge der Tragprofils.

Das äußere Hohlprofil kann wie das innere Hohlprofil aus Metall bestehen. Vorzugsweise bestehen beide Hohlprofile aus einem korrosionsresistenten, leichten und gut leitfähigen Aluminium. Es ist alternativ oder ergänzend denkbar, dass das äußere Hohlprofil aus einem Kunststoff und/oder Holz besteht.

Für eine hohe Tragfähigkeit des Tragprofils ist es zweckmäßig, dass das äußere und/oder das innere Hohlprofil in ihrem Querschnitt jeweils geschlossen hohl sind. Vorzugsweise sind sowohl das äußere als auch das innere Hohlprofil einzellig, das heißt mit genau einer Hohlkammer ausgeführt. Denkbar ist aber auch, diese mehrzellig zu gestalten.

Der Innenquerschnitt des äußeren Hohlprofils und/oder der Außenquerschnitt des inneren Hohlprofils kann jeweils vorteilhaft polygonal ausgeführt sein. Dies kann die Tragfähigkeit des Tragprofils weiter erhöhen. In einer bevorzugten Ausführungsform ist vorgesehen, dass der Innenquerschnitt des äußeren Hohlprofils und der Außenquerschnitt des inneren Hohlprofils sich im Wesentlichen kongruent gleichen. Dadurch lässt sich die Aufnahme und das formschlüssige Halten des inneren Hohlprofils im äußeren Hohlprofil mittels des Isolatormittels besonders materialeffizient erzielen. Aus demselben Grund ist denkbar, dass der Innenquerschnitt des äußeren Hohlprofils und ein Hüllpolygon des Außenquerschnitts des inneren Hohlprofils sich im Wesentlichen kongruent gleichen.

In einer strukturell besonders vorteilhaften Ausführungsform ist das innere Hohlprofil im äußeren Hohlprofil zentral angeordnet, insbesondere in Kombination mit der vorbeschriebenen Formenkongruenz.

Vorzugsweise ist das Verhältnis der Fläche des Innenquerschnitts des inneren Hohlprofils zur Fläche des Innenquerschnitts des äußeren Hohlprofils größer als 0,4 und kleiner 1. Das Verhältnis zwischen dem Widerstandsmoment des inneren Hohlprofils zum Widerstandsmoment des äußeren Hohlprofils ist in jeder Richtung quer zum Tragprofil bevorzugt größer 0,1 und kleiner 0,5. Diese Quotienten, insbesondere in Kombination, haben sich hinsichtlich Tragfähigkeit und Materialausnutzung als gunstig erwiesen.

Zum Bewirken der Aufnahme und des in allen Querrichtungen formschlüssigen Haltens kann das Isolatormittel in Umfangsrichtung zumindest abschnittsweise sowohl eine passende Gegenform zum äußeren Hohlprofil als auch eine passende Gegenform zum inneren Hohlprofil sein.

In einer möglichen Ausführungsform ist vorgesehen, dass das Isolatormittel längs und/oder quer zum Tragprofil mehrteilig ausgeführt ist. Dies kann materialsparend sein. Zweckmäßige Abstände in Längsrichtung zwischen solchen Teilen können insbesondere im Bereich zwischen 20 und 50 cm liegen. Bei in Querrichtung mehrteiliger Ausführungsform sind die solche Teile des Isolatormittels bevorzugt an mehreren Außenkanten des inneren Hohlprofils angeordnet, beispielsweise an den vier Außenecken einer Trapezform.

Das Isolatormittel ist bevorzugt ein Hohlprofil, insbesondere ein geschlossen hohles. Außerdem kann es im Wesentlichen die gleiche Länge aufweisen wie das äußere und das innere Hohlprofil. Ein derartiges Isolatormittel ist einfach zu fügen und trennt das äußere Hohlprofil und das innere Hohlprofil elektrisch ringsum. Denkbar ist auch, das Isolatormittel mittels mehrerer in Längsrichtung angeordneter Hohlprofilstücke zu gestalten. Auf diese Weise kann das Tragprofil dreischalig gestaltet sein, entweder abschnittsweise oder bevorzugt im Wesentlichen auf seiner gesamten Länge.

In einer besonders bevorzugten Ausführungsform weist das äußere Hohlprofil und/oder das innere Hohlprofil und/oder das Isolatormittel jeweils eine extrudierbare Grundform auf. Dadurch ist ein Herstellen mittels Strangpressen möglich.

Am Isolatormittel können außen und/oder innen mehrere Abstandselemente vorhanden sein. Derartige Abstandselemente können das Ineinanderfügen erleichtern und größere Toleranzen bei der Herstellung des inneren und/oder äußeren Hohlprofils und/oder des Isolatormittels zulassen. Dies gilt im Besonderen bei einem Isolatormittel, das als längs durchgehendes Hohlprofil ausgeführt ist.

Für die Befestigung der getragenen PV-Module oder für die Befestigung des Tragprofils an einer Unterkonstruktion ist es vorteilhaft, wenn das äußere Hohlprofil außen mindestens einen hinterschnittenen Befestigungskanal aufweist. Ein derartiger Befestigungskanal ist bevorzugt beidseitig hinterschnitten und kann etwa mit Schraubenmuttern hintergriffen werden.

Für die Befestigung der getragenen PV-Module kann das äußere Hohlprofil außen eine vorzugsweise plane Auflagefläche und einen hinterschnittenen Befestigungskanal aufweisen, wobei der Befestigungskanal die Auflagefläche optional teilt und die PV-Module auf der Auflagefläche aufliegen.

Zur Befestigung des Tragprofils ist es bevorzugt, wenn das äußere Hohlprofil außen Befestigungsränder oder Befestigungsnuten aufweist, an denen das äußere Hohlprofil an einer Unterkonstruktion befestigt sein kann oder ist. Eine solche Befestigungsart ist praktisch, vielseitig und sicher.

Vorzugsweise sind die Auflagefläche und die Befestigungsränder und/oder Befestigungsnuten an einander gegenüberliegenden Seiten des äußeren Hohlprofils vorgesehen. Insbesondere können die Befestigungsränder auf der Seite zu der Unterkonstruktion und die Auflageflächen auf der Seite zu den PV-Module angeordnet sein.

Es versteht sich, dass das äußere Hohlprofil, das innere Hohlprofil und das Isolatormittel die verschiedensten Profilformen aufweisen können. So sind rechteckige, quadratische, zylindrische, elliptische sowie beliebige polygonale, insbesondere dreieckige und sechseckige Formen denkbar. In einer bevorzugten Gestaltung der Tragschiene ist vorgesehen, dass der Innenquerschnitt des äußeren Hohlprofils und/oder der Außenquerschnitt des inneren Hohlprofils und/oder der Außenquerschnitt des Isolatormittels und/oder der Innenquerschnitt des Isolatormittels jeweils im Wesentlichen trapezförmig ist. Die Trapezform hat sich als strukturell vorteilhaft erwiesen. Aus demselben Grund ist es bevorzugt, wenn ein vierseitiges Hüllpolygon des Außenquerschnitts des äußeren Hohlprofils und/oder des Außenquerschnitts des Isolatormittels und/oder des Außenquerschnitts des inneren Hohlprofils jeweils ein Trapez bildet. Außerdem ist möglich, dass der Querschnitt des äußeren Hohlprofils auf einer Trapezform basiert, deren eine Parallelseite beidseitig mittels zwei Befestigungsränder verlängert ist und an deren anderen Parallelseite mittels eines hinterschnittenen Befestigungskanals ein Auflagesteg angeordnet ist.

In einer weiteren Ausführungsform kann das äußere Hohlprofil mindestens einen dreiseitigen Aufnahmekanal aufweisen, in dem die PV-Module einseitig mit ihren Rändern oder Rahmen eingesetzt sind. In einer Weiterbildung kann das äußere Hohlprofil genau zwei solche dreiseitigen Aufnahmekanäle aufweisen, die entgegengesetzt geöffnet sind, sodass darin zwei Reihen von PV-Modulen mit ihren Rändern oder Rahmen jeweils einseitig einsetzbar sind.

In einer Variante ist vorgesehen, dass neben dem inneren Hohlprofil ein zweites metallenes inneres Hohlprofil vorgesehen ist, wobei das Isolatormittel das äußere Hohlprofil und das zweite innere Hohlprofil ebenfalls elektrisch voneinander trennt, und das zweite innere Hohlprofil ebenfalls mittels des Isolatormittels in dem äußeren Hohlprofil aufgenommen und ebenfalls mittels des Isolatormittels in allen Richtungen quer zum Tragprofil formschlüssig in dem äußeren Hohlprofil gehalten ist. In einer weiteren Variante kann ein zweites metallenes inneres Hohlprofil und ein zweites Isolatormittel vorgesehen sein, wobei das zweite Isolatormittel das erste innere Hohlprofil und das zweite innere Hohlprofil elektrisch voneinander trennt, und das zweite innere Hohlprofil mittels des zweiten Isolatormittels in dem ersten inneren Hohlprofil aufgenommen und mittels des zweiten Isolatormittels in allen Richtungen quer zum Tragprofil formschlüssig in dem ersten inneren Hohlprofil gehalten ist. Bei diesen Varianten sind vorteilhaft zwei isolierte Leiter nutzbar, insbesondere als Ersatz für eine zweiadrige Gleichstromleitung.

Zum Herstellen eines erfindungsgemäßen Tragprofils kann zuerst das Isolatormittel außen auf dem inneren Hohlprofil angeordnet werden und anschließend das innere Hohlprofil zusammen mit dem Isolatormittel in das äußere Hohlprofil eingebracht werden. In einer Variante kann zuerst das Isolatormittel innen in dem äußeren Hohlprofil angeordnet werden und anschließend das innere Hohlprofil in das Isolatormittel eingebracht werden. Das Anordnen des Isolatormittels kann vorzugsweise durch Spritzen, Wickeln, Schieben, Ziehen, Kleben oder Koextrusion erfolgen. Das Einbringen des inneren Hohlprofils erfolgt gegebenenfalls zusammen mit dem Isolatormittel bevorzugt durch Einschieben, Einstecken oder Einpressen. Es ist auch denkbar, das äußere Hohlprofil, das Isolatormittel sowie das innere Hohlprofil in einem dreischaligen Strang gemeinsam zu koextrudieren.

In einer vorteilhaften elektrischen Verschaltung des Tragprofils ist vorgesehen, dass die PV-Module in einem Strang elektrisch in Reihe geschalteter PV-Module eingebunden sind, wobei der Strang an seinem einen elektrischen Ende mit einem Längsende des inneren Hohlprofils elektrisch verbunden ist. Außerdem kann der Strang an seinem anderen elektrischen Ende mit einem Wechselrichter elektrisch verbunden sein. Das andere Längsende des inneren Hohlprofils kann mit einem, vorzugsweise demselben Wechselrichter elektrisch verbunden sein.

Bevorzugt ist es, wenn der Strang an seinem anderen elektrischen Ende mit dem einen Pol eines Wechselrichters elektrisch verbunden ist und das andere Längsende des inneren Hohlprofils mit dem anderen Pol des Wechselrichters elektrisch verbunden ist. Auf diese Art ist ein PV-Generator erstellt, wobei ein Teil der Gleichstromverkabelung vorteilhaft durch das innere Hohlprofil ersetzt ist.

Ein solcher Strang oder die einzelnen PV-Module können nicht nur an den Längsenden des inneren Hohlprofils angeschlossen sein, sondern auch an Anschlussstellen an beliebigen Stellen entlang Tragprofils. Eine solche Anschlussstelle kann das äußere Hohlprofil und das Isoliermittel von außen her mittels einer Öffnung durchdringen, sodass der Anschluss zum inneren Hohlprofil in einer Richtung quer zum Tragprofil frei gehalten ist.

Zum Schutz von Personen und den PV-Modulen ist es zweckmäßig, das äußere Hohlprofil mit einem Massepotential, insbesondere einem Erdpotential elektrisch zu verbinden.

Nachfolgend wird die Erfindung anhand mehrerer Ausführungsbeispiele näher erläutert. Es zeigt:
- **Fig. 1**: eine schematische Draufsicht eines Tragprofil einer Reihe mehrerer PV-Module
- **Fig. 2**: eine Seitenansicht des Tragprofils gemäß **Fig. 1**
- **Fig. 3**: separate Seitenansichten eines äußeren Hohlprofils, eines Isolatormittels und eines inneren Hohlprofils des Tragprofils gemäß **Fig. 1**
- **Fig. 4**: eine Seitenansicht eines weiteren Tragprofils
- **Fig. 5**: eine Seitenansicht eines weiteren Tragprofils
- **Fig. 6**: eine Seitenansicht eines weiteren Tragprofils
- **Fig. 7**: eine schematische Schaltanordnung mit dem Tragprofil gemäß **Fig. 1**

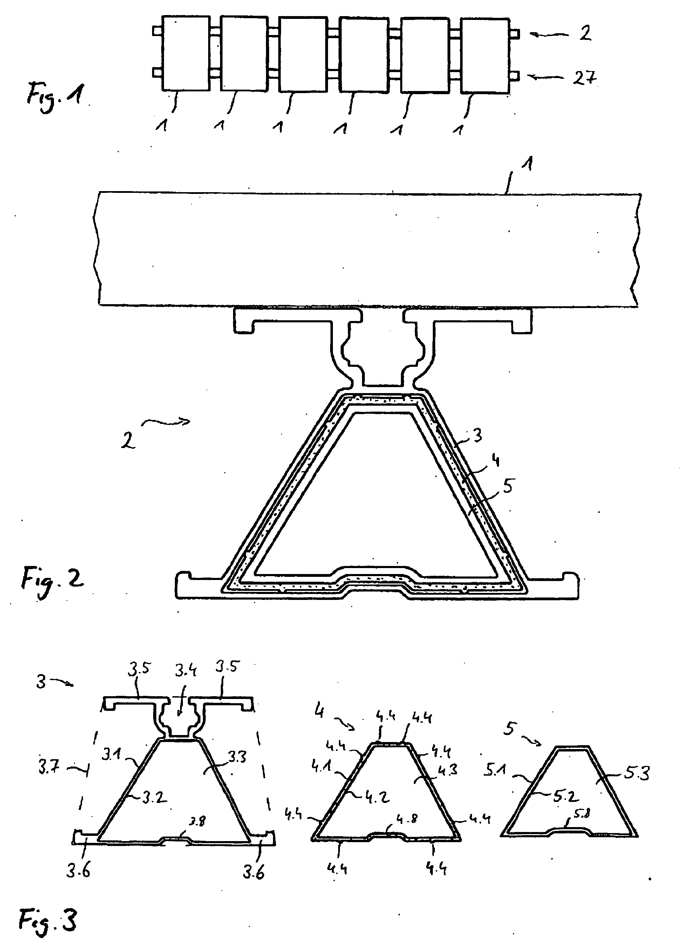

**Fig. 1** zeigt ein Tragprofil **2** einer Reihe von sechs PV-Modulen **1**, wobei die PV-Module 1 mittels des Tragprofils **2** einseitig getragen sind. Auf der anderen Seite sind die PV-Module 1 von einem herkömmlichen Tragprofil **27** getragen.

Wie insbesondere aus **Fig. 2** und **Fig. 3** ersichtlich, weist das Tragprofil **2** ein metallenes äußeres Hohlprofil **3,** ein Isolatormittel **4** und ein metallenes inneres Hohlprofil **5** auf, wobei das Isolatormittel **4** das äußere Hohlprofil **3** und das innere Hohlprofil **5** voneinander elektrisch trennt. Außerdem ist zu erkennen, dass das innere Hohlprofil **5** mittels des Isolatormittels **4** in dem äußeren Hohlprofil **3** aufgenommen und mittels des Isolatormittels **4** in allen Richtungen quer zum Tragprofil **2** formschlüssig in dem äußeren Hohlprofil **3** gehalten ist.

Weiter ist zu erkennen, dass der Innenquerschnitt **3.2** des äußeren Hohlprofils **3** und der Außenquerschnitt **5.1** des inneren Hohlprofils **5** sich kongruent gleichen. Das innere Hohlprofil **5** ist im äußeren Hohlprofil **3** zentral angeordnet.

Das Verhältnis der Fläche **5.3** des Innenquerschnitts **5.2** des inneren Hohlprofils **5** zur Fläche **3.3** des Innenquerschnitts **3.2** des äußeren Hohlprofils **3** beträgt rund **0,6.** Das Verhältnis des Widerstandsmoments des inneren Hohlprofils **5** zum Widerstandsmoment des äußeren Hohlprofils **3** ist in jeder Richtung quer zum Tragprofil **2** größer als 0,2 und kleiner 0,4.

Das äußere Hohlprofil **3** und das innere Hohlprofil **5** sowie das Isolatormittel **4,** das auch als Hohlprofil ausgeführt ist, weisen jeweils einen geschlossenen, einzelligen Hohlquerschnitt auf. Sie haben außerdem jeweils eine extrudierbare Form und eine etwa gleiche Länge.

Das Isolatormittel **4** bildet sowohl eine Gegenform zum äußeren Hohlprofil **3** als ebenfalls eine Gegenform zum inneren Hohlprofil **5.** Es weist außen außerdem mehrere Abstandselemente **4.4** auf, die im äußeren Hohlprofil **3** innen anstehen.

Zum Einbringen des inneren Hohlprofils **5** in das äußere Hohlprofil **3** ist vorgesehen, dass zuerst das Isolatormittel **4** außen auf dem inneren Hohlprofil **5** angeordnet wird und dann anschließend das innere Hohlprofil **6** zusammen mit dem Isolatormittel **4** in das äußere Hohlprofil **3** formschlüssig passend eingeschoben wird.

Das äußere Hohlprofil **3** weist außen oben eine Auflagefläche **3.5** und einen hinterschnittenen Befestigungskanal **3.4** auf, wobei der Befestigungskanal **3.4** die Auflagefläche **3.5** teilt und die PV-Module **1**, von denen in **Fig. 2** nur eines ausschnittweise erkennbar ist, auf der Auflagefläche **3.5** aufliegen. Das äußere Hohlprofil **3** weist außerdem außen unten zwei Befestigungsränder **3.6** auf, an denen das äußere Hohlprofil **3** an einer nicht näher dargestellten gewöhnlichen Unterkonstruktion befestigt sein kann.

Wie weiter in **Fig. 2** und **Fig. 3** zu erkennen ist, sind der Innenquerschnitt **3.2** des äußeren Hohlprofils **3** und der Außenquerschnitt **5.1** des inneren Hohlprofils **5** im Wesentlichen jeweils trapezförmig. Auch der Innenquerschnitt **4.2** und der Außenquerschnitt **4.1** des Isolatormittels **4** sind ebenfalls im Wesentlichen trapezförmig. Lediglich eine in allen drei Hohlprofilen **3**, **4**, **5** unten vorgesehene Versteifungsrippe **3.8**, **4.8** bzw. **5.8** sowie die Abstandselemente **4.4** außen am Isolatormittel 4 weichen von einer strengen Trapezform ab.

Außerdem bildet ein durch gestrichelte Linien dargestelltes vierseitiges Hüllpolygon **3.7** des Außenquerschnitts **3.1** des äußeren Hohlprofils **3** ein Trapez. Dies gilt auch für den Außenquerschnitt **4.1** des Isolatormittels **4** und den Außenquerschnitt **5.1** des inneren Hohlprofils **5**, was jedoch nicht näher kenntlich gemacht ist.

Der Querschnitt **3.1** des äußeren Hohlprofils **3** basiert auf einer Trapezform, deren eine obere Parallelseite beidseitig mit den zwei Befestigungsrändern **3.6** verlängert ist und an deren anderen untere Parallelseite mittels der Wände des hinterschnittenen Befestigungskanals **3.4** der Auflagesteg **3.5** angeordnet ist.

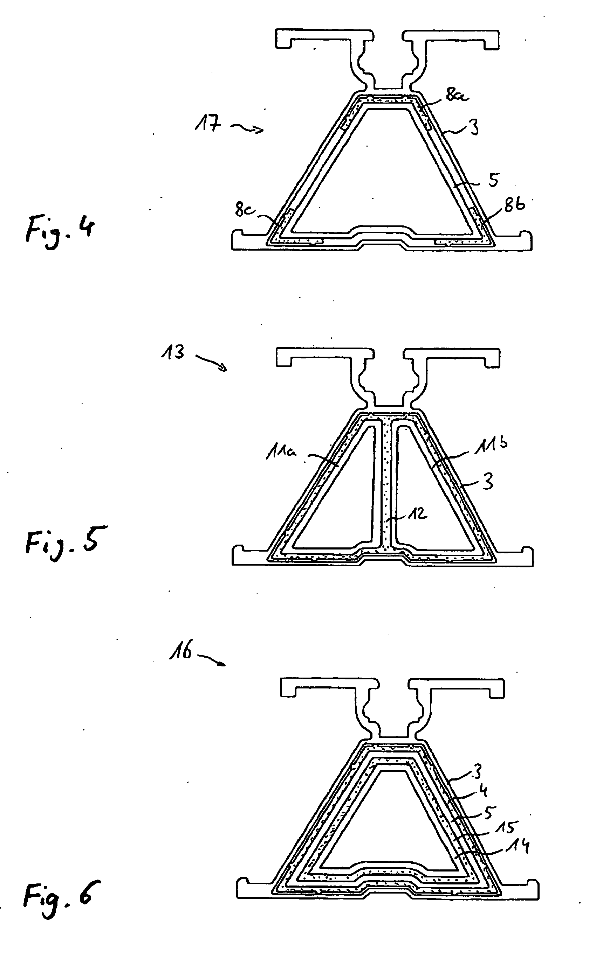

**Fig. 4** zeigt anhand des äußeren und inneren Hohlprofils **3** und **5** gemäß **Fig. 3**, dass das Isolatormittel alternativ mehrteilig ausgeführt sein kann. So sind in diesem Ausführungsbeispiel drei Teile **8 a**, **8 b**, **8 c** vorgesehen, die längs durchgehend oder diesbezüglich ebenfalls mehrteilig ausgeführt sein können. Auch in diesem Ausführungsbeispiel ist das innere Hohlprofil 5 erfindungsgemäß mittels des Isolatormittels, das heißt genauer mittels seiner drei Teile **8 a**, **8 b**, **8 c** in dem äußeren Hohlprofil **3** aufgenommen und in allen Richtungen quer zum Tragprofil **17** formschlüssig in dem äußeren Hohlprofil 3 gehalten.

**Fig. 5** zeigt eine alternative Ausführungsform eines Tragprofils **13,** bei der neben dem ersten inneren Hohlprofil **11 a** ein zweites metallenes inneres Hohlprofil **11 b** angeordnet ist. Weiter ist vorgesehen, dass das Isolatormittel **12** das äußere Hohlprofil **3** und das zweite innere Hohlprofil **11 b** elektrisch voneinander trennt, und das zweite innere Hohlprofil **11 b** mittels des Isolatormittels **12** im äußeren Hohlprofil **3** aufgenommen und mittels des Isolatormittels **12** in allen Richtungen quer zum Tragprofil **13** formschlüssig im äußeren Hohlprofil **3** gehalten ist. Die beiden inneren Hohlprofile **11 a** und **11 b** sind als zweiadriger elektrischer Leiter vorteilhaft nutzbar.

**Fig. 6** zeigt eine alternative Ausführungsform eines Tragprofils **16,** bei der ein zweites metallenes inneres Hohlprofil **14** und ein zweites Isolatormittel **15** vorgesehen sind, wobei das zweite Isolatormittel **15** das erste innere Hohlprofil **5** und das zweite innere Hohlprofil **14** elektrisch voneinander trennt. Das zweite innere Hohlprofil **14** ist im ersten inneren Hohlprofil **5** mittels des zweiten Isolatormittels **15** aufgenommen und mittels des zweiten Isolatormittels **15** formschlüssig in allen Richtungen quer zum Tragprofil **16** gehalten. Auch diese beiden inneren Hohlprofile **5** und **14** sind als zweiadriger elektrischer Leiter vorteilhaft nutzbar.

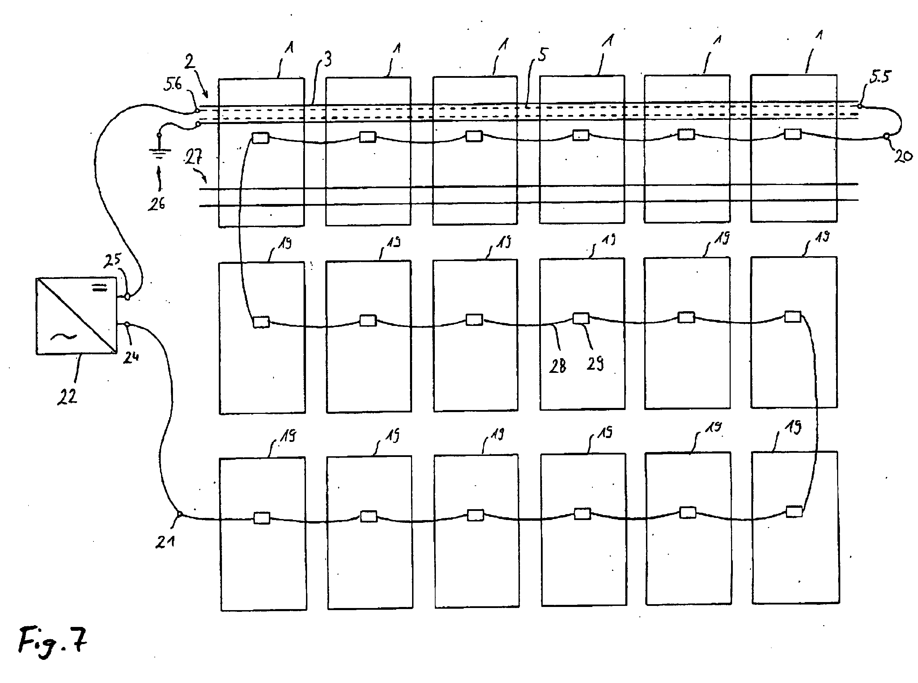

**Fig. 7** zeigt eine Schaltanordnung mit dem Tragprofil gemäß **Fig. 1** bzw. **Fig. 3****.** Es sind die sechs PV-Module **1** auf den Tragprofilen **2** und **27** angeordnet. Außerdem sind zwölf weitere PV-Module **19** angeordnet. Und es ist ein Wechselrichter **22** mit zwei Anschlusspolen **24** und **25** angeordnet.

Die PV-Module **1** und **19** sind gemeinsam in einem Strang elektrisch in Reihe geschaltet. Der Strang verläuft von einem elektrischen Ende **20** zu einem anderen Ende **21**. Wesentlich ist, dass der Strang an dem elektrischen Ende **20** mit einem Längsende **5.5** des inneren Hohlprofil **5** und an seinem anderen Ende **21** mit dem Anschlusspol **24** mit dem Wechselrichter **22** mittels einer Verbindungsleitung elektrisch verbunden ist. Zum Schließen des Gleichstromkreises ist das andere Längsende **5.6** des inneren Hohlprofils **5** mit dem anderen Anschlusspol **25** des Wechselrichters **22** mittels einer Verbindungsleitung elektrisch verbunden. Schließlich ist vorgesehen, dass das äußere Hohlprofil **3** mit einem Massepotential **26**, insbesondere dem Erdpotential elektrisch verbunden ist.

### Bezugszeichenliste

- **1**: PV-Modul
- **1'**: PV-Modul
- **2**: Tragprofil
- **3**: äußeres Hohlprofil
- **3.1**: Außenquerschnitt
- **3.2**: Innenquerschnitt
- **3.3**: Innenfläche
- **3.4**: Befestigungskanal
- **3.5**: Auflagefläche
- **3.6**: Befestigungsrand
- **3.7**: vierseitiges Hüllpolygon
- **3.8**: Versteifungsrippe
- **4**: Isolatormittel
- **4.1**: Außenquerschnitt
- **4.2**: Innenquerschnitt
- **4.3**: Innenfläche
- **4.4**: Abstandselemente
- **4.8**: Versteifungsrippe
- **5**: inneres Hohlprofil
- **5.1**: Außenquerschnitt
- **5.2**: Innenquerschnitt
- **5.3**: Innenfläche
- **5.4**: Außenkante
- **5.5**: ein Längsende
- **5.6**: anderes Längsende
- **5.8**: Versteifungsrippe
- **8 a**: Isolatormittel
- **8 b**: Isolatormittel
- **8 c**: Isolatormittel
- **11 a**: erstes inneres Hohlprofil
- **11 b**: zweites inneres Hohlprofil
- **12**: Isolatormittel
- **13**: Tragprofil
- **14**: zweites inneres Hohlprofil
- **15**: zweites Isolatormittel
- **16**: Tragprofil
- **17**: Tragprofil
- **19**: PV-Modul
- **20**: elektrisches Ende
- **21**: elektrisches Ende
- **22**: Wechselrichter
- **24**: ein Pol
- **25**: anderer Pol
- **26**: Massepotential
- **27**: herkömmliches Tragprofil
- **28**: Teilstück Strang
- **29**: Anschluss PV-Modul.

## Patentansprüche

1. Tragprofil für eine Reihe von PV-Modulen, die mittels des Tragprofils (**2**) getragen werden können, wobei das Tragprofil (**2**) ein äußeres Hohlprofil (**3**), ein Isolatormittel (**4**) und ein metallenes inneres Hohlprofil (**5**) aufweist, und das Isolatormittel (**4**) das äußere Hohlprofil (**3**) und das innere Hohlprofil (**5**) voneinander elektrisch trennt, und das innere Hohlprofil (**5**) mittels des Isolatormittels (**4**) in dem äußeren Hohlprofil (**3**) aufgenommen und mittels des Isolatormittels (**4**) in allen Richtungen quer zum Tragprofil (**2**) formschlüssig in dem äußeren Hohlprofil (**3**) gehalten ist.

2. Tragprofil nach Anspruch 1, **dadurch gekennzeichnet, dass** das Isolatormittel (**4**) zumindest abschnittsweise sowohl eine Gegenform zum äußeren Hohlprofil (**3**) als auch eine Gegenform zum inneren Hohlprofil (**5**) ist.

3. Tragprofil nach einem der vorhergehenden Ansprüche, **dadurch gekennzeichnet, dass** das Isolatormittel (**8 a**, **8 b, 8 c**) längs und/oder quer zum Tragprofil mehrteilig ausgeführt ist.

4. Tragprofil nach einem der vorhergehenden Ansprüche, **dadurch gekennzeichnet, dass** das Isolatormittel (**4**) ein Hohlprofil ist.

5. Tragprofil nach einem der vorhergehenden Ansprüche, **dadurch gekennzeichnet, dass** außen und/oder innen am Isolatormittel (**4**) mehrere Abstandselemente (**4.4**) vorhanden sind.

6. Tragprofil nach einem der vorhergehenden Ansprüche, **dadurch gekennzeichnet, dass** das äußere Hohlprofil (**3**) außen eine Auflagefläche (**3.5**) und einen hinterschnittenen Befestigungskanal (**3.4**) aufweist, wobei der Befestigungskanal (**3.4**) die Auflagefläche (**3.5**) teilt und die PV-Module (**1**) auf der Auflagefläche (**3.5**) aufliegen.

7. Tragprofil nach einem der vorhergehenden Ansprüche, **dadurch gekennzeichnet, dass** ein Innenquerschnitt (**3.2**) des äußeren Hohlprofils (**3**) und/oder ein Außenquerschnitt (**5.1**) des inneren Hohlprofils (**5**) und/oder ein Außenquerschnitt (**4.1**) des Isolatormittels (**4**) und/oder ein Innenquerschnitt (**4.2**) des Isolatormittels (**4**) jeweils trapezförmig ist.

8. Tragprofil nach einem der vorhergehenden Ansprüche, **dadurch gekennzeichnet, dass** ein vierseitiges Hüllpolygon (**3.7**) eines Außenquerschnitts (**3.1**) des äußeren Hohlprofils (**3**) und/oder eines Außenquerschnitts (**4.1**) des Isolatormittels (**4**) und/oder eines Außenquerschnitts (**5.1**) des inneren Hohlprofils (**5**) jeweils ein Trapez bildet.

9. Tragprofil nach einem der vorhergehenden Ansprüche, **dadurch gekennzeichnet, dass** ein Querschnitt (**3.1**) des äußeren Hohlprofils (**3**) auf einer Trapezform basiert, deren eine Parallelseite beidseitig mittels zweier Befestigungsränder (**3.6**) verlängert ist und an deren anderen Parallelseite mittels eines hinterschnittenen Befestigungskanals (**3.4**) ein Auflagesteg angeordnet ist.

10. Tragprofil nach einem der Ansprüche 1 bis 9, **dadurch gekennzeichnet, dass** neben dem inneren Hohlprofil (**11 a**) ein zweites metallenes inneres Hohlprofil (**11 b**) vorgesehen ist, wobei das Isolatormittel (**12**) das äußere Hohlprofil (**3**) und das zweite innere Hohlprofil (**11 b**) elektrisch voneinander trennt, und das zweite innere Hohlprofil (**11 b**) mittels des Isolatormittels (**12**) in dem äußeren Hohlprofil (**3**) aufgenommen und mittels des Isolatormittels (**12**) in allen Richtungen quer zu dem Tragprofil (**13**) formschlüssig in dem äußeren Hohlprofil (**3**) gehalten ist.

11. Tragprofil nach einem der Ansprüche 1 bis 9, **dadurch gekennzeichnet, dass** ein zweites metallenes inneres Hohlprofil (**14**) und ein zweites Isolatormittel (**15**) vorgesehen sind, wobei das zweite Isolatormittel (**15**) das erste innere Hohlprofil (**5**) und das zweite innere Hohlprofil (**14**) elektrisch voneinander trennt, und das zweite innere Hohlprofil (**14**) mittels des zweiten Isolatormittels (**15**) in dem ersten inneren Hohlprofil (**5**) aufgenommen und mittels des zweiten Isolatormittels (**15**) in allen Richtungen quer zum Tragprofil (**16**) formschlüssig in dem ersten inneren Hohlprofil (**5**) gehalten ist.

12. Tragprofil nach einem der Ansprüche 1 bis 11, **dadurch gekennzeichnet, dass** die PV-Module (**1**) in einem Strang (**20** zu **21**) elektrisch in Reihe geschalteter PV-Module (**1**, **19**) eingebunden sind, wobei der Strang (**20** zu **21**) an seinem einen elektrischen Ende (**20**) mit einem Längsende (**5.5**) des inneren Hohlprofil (**5**) elektrisch verbunden ist.

13. Tragprofil nach dem vorhergehenden Anspruch, **dadurch gekennzeichnet, dass** der Strang (**20** zu **21**) an seinem anderen Ende (**21**) mit dem einen Pol (**24**) eines Wechselrichters (**22**) elektrisch verbunden ist und das andere Längsende (**5.6**) des inneren Hohlprofils (**5**) mit dem anderen Pol (**25**) des Wechselrichters (**22**) elektrisch verbunden ist.

14. Verfahren zum Herstellen eines Tragprofils nach einem der Ansprüche 1 bis 9, **dadurch gekennzeichnet, dass** zuerst das Isolatormittel (**4**) außen auf dem inneren Hohlprofil (**5**) angeordnet wird und anschließend das innere Hohlprofil (**5**) zusammen mit dem Isolatormittel (**4**) in das äußere Hohlprofil (**3**) eingebracht wird oder aber zuerst das Isolatormittel (**4**) innen in dem äußeren Hohlprofil (**3**) angeordnet wird und anschließend das innere Hohlprofil (**5**) in das Isolatormittel (**4**) eingebracht wird.

## Claims

1. A support rail for a row of PV modules that can be supported by means of the support rail (**2**), wherein the support rail (**2**) comprises an outer hollow rail (**3**), **an insulating** means (**4**) and a metallic inner hollow rail (**5**), and the insulating means (**4**) separates the outer hollow rail (**3**) and the inner hollow rail (**5**) from each other electrically, and the inner hollow rail (**5**) is accommodated within the outer hollow rail (**3**) by means of the insulating means (**4**), and is held in all directions transversely to the support rail (**2**) in a positive-locking manner within the outer hollow rail (**3**) by means of the insulating means (**4**).

2. The support rail according to claim 1 **characterized in that** the insulating means (**4**) is at least sectionally a counter-form to the outer hollow rail (**3**) and a counter-form to the inner hollow rail (**5**).

3. The support rail according to one of the preceding claims **characterized in that** the insulating means (**8 a**, **8 b**, **8 c**) is provided in multi-parts longitudinally and/or transversely to the support rail.

4. The support rail according to one of the preceding claims **characterized in that** the insulating means (**4**) is a hollow rail.

5. The support rail according to one of the preceding claims **characterized in that** several spacing elements (**4.4**) are disposed at the outer side and/or at the inner side of the insulating means (**4**).

6. The support rail according to one of the preceding claims **characterized in that** the outer hollow **rail (3**) comprises a bearing surface (**3.5**) and an undercut fastening channel (**3.4**) at its outer side, wherein the fastening channel (**3.4**) divides the bearing surface (**3.5**), and the PV modules (**1**) rest on the bearing surface (**3.5**).

7. The support rail according to one of the preceding claims **characterized in that** an inner cross section (**3.2**) of the outer hollow rail (**3**) and/or an outer cross section (**5.1**) of the inner hollow rail (**5**) and/or an outer cross section (**4.1**) of the insulating means (**4**) and/or an inner cross section (**4.2**) of the insulating means (**4**) are trapezoidal.

8. The support rail according to one of the preceding claims **characterized in that** a foursided envelope polygon (**3.7**) of an outer cross section (**3.1**) of the outer hollow rail (**3**) and/or of an outer cross section (**4.1**) of the insulating means (**4**) and/or of an outer cross section (**5.1**) of the inner hollow rail (**5**) each forms a trapezoid.

9. The support rail according to one of the preceding claims **characterized in that** a cross section (**3.1**) of the outer hollow rail (**3**) is based on a trapezoidal form, one parallel side of the trapezoidal form is extended on both sides by means of two fastening edges (**3.6**), and on the other parallel side of the trapezoidal form a bearing surface (**3.5**) is arranged by means of an undercut fastening channel (**3.4**).

10. The support rail according to one of claims 1 to 9 **characterized in that**, beside the inner hollow rail (**11 a**), a second metallic inner hollow rail (**11 b**) is provided, wherein the insulating means (**12**) separates the outer hollow rail (**3**) and the second inner hollow rail (**11 b**) from each other electrically, and the second inner hollow rail (**11 b**) is accommodated within the outer hollow rail (**3**) by means of the insulating means (**12**), and is held in all directions transversely to the support rail (**13**) in a positive-locking manner within the outer hollow rail (**3**) by means of the insulating means (**12**).

11. The support rail according to one of claims 1 to 9 **characterized in that** a second metallic inner hollow rail (**14**) and a second insulating means (**15**) are provided, wherein the second insulating means (**15**) separates the inner hollow rail (**5**) and the second inner hollow rail (**14**) from each other electrically, and the second inner hollow rail (**14**) is accommodated within the first inner hollow rail (**5**) by means of the second insulating means (**15**), and is held in all directions transversely to the support rail (**16**) in a positive-locking manner within the first inner hollow rail (**5**) by means of the second insulating means (**15**).

12. The support rail according to any one of claims 1 to 11 **characterized in that** the PV modules (**1**) are integrated in a string (**20** to **21**) of PV modules (**1, 19**) connected electrically in series, wherein the string (**20** to **21**) is at its one electric end (**20**) electrically connected with a longitudinal end (**5.5**) of the inner hollow rail (**5**).

13. The support rail according to the preceding claim **characterized in that** the string (**20** to **21**) is at its other end (**21**) electrically connected with a pole (**24**) of an inverter (**22**), and the other longitudinal end (**5.6**) of the inner hollow rail (**5**) is electrically connected with the other pole (**25**) of the inverter (**22**).

14. A method for manufacturing a support rail according to any one of claims 1 to 9 **characterized in that**, at first, the insulating means (**4**) is arranged on the outer side of the inner hollow rail (**5**), and then, the inner hollow rail (**5**) is inserted together with the insulating means (**4**) into the outer hollow rail (**3**) or, however, at first, the insulating means (**4**) is arranged on the inner side of the outer hollow rail (**3**), and then, the inner hollow rail (**5**) is inserted into the insulating means (**4**).

## Revendications

1. Profilé porteur pour une série de modules PV qui peuvent être portés au moyen du profilé porteur (2), le profilé porteur (2) présentant un profilé creux extérieur (3), un moyen d'isolation (4) et un profilé creux intérieur métallique (5), et le moyen d'isolation (4) séparant électriquement le profilé creux extérieur (3) et le profilé creux intérieur (5) l'un de l'autre, et le profilé creux intérieur (5) étant reçu dans le profilé creux extérieur (3) au moyen du moyen d'isolation (4) et étant retenu au moyen du moyen d'isolation (4) dans toutes les directions transversalement par rapport au profilé porteur (2) par engagement par correspondance de forme dans le profilé creux extérieur (3).

2. Profilé porteur selon la revendication 1, **caractérisé en ce que** le moyen d'isolation (4) est au moins en partie également une contre-moule par rapport au profilé creux extérieur (3) ainsi qu'une forme conjuguée par rapport au profilé creux intérieur (5).

3. Profilé porteur selon l'une quelconque des revendications précédentes, **caractérisé en ce que** le moyen d'isolation (8a, 8b, 8c) est réalisé en plusieurs parties longitudinalement et/ou transversalement par rapport au profilé porteur.

4. Profilé porteur selon l'une quelconque des revendications précédentes, **caractérisé en ce que** le moyen d'isolation (4) est un profilé creux.

5. Profilé porteur selon l'une quelconque des revendications précédentes, **caractérisé en ce que** plusieurs éléments d'espacement (4.4) sont prévus à l'extérieur et/ou à l'intérieur sur le moyen d'isolation (4).

6. Profilé porteur selon l'une quelconque des revendications précédentes, **caractérisé en ce que** le profilé creux extérieur (3) présente à l'extérieur une surface d'appui (3.5) et un canal de fixation en contre-dépouille (3.4), le canal de fixation (3.4) divisant la surface d'appui (3.5) et les modules PV (1) reposant sur la surface d'appui (3.5).

7. Profilé porteur selon l'une quelconque des revendications précédentes, **caractérisé en ce qu'**une section transversale intérieure (3.2) du profilé creux extérieur (3) et/ou une section transversale extérieure (5.1) du profilé creux intérieur (5) et/ou une section transversale extérieure (4.1) du moyen d'isolation (4) et/ou une section transversale intérieure (4.2) du moyen d'isolation (4) ont à chaque fois une forme trapézoïdale.

8. Profilé porteur selon l'une quelconque des revendications précédentes, **caractérisé en ce qu'**un polygone d'enveloppe (3.7) à quatre côtés d'une section transversale extérieure (3.1) du profilé creux extérieur (3) et/ou d'une section transversale extérieure (4.1) du moyen d'isolation (4) et/ou d'une section transversale extérieure (5.1) du profilé creux intérieur (5) forme à chaque fois un trapèze.

9. Profilé porteur selon l'une quelconque des revendications précédentes, **caractérisé en ce qu'**une section transversale (3.1) du profilé creux extérieur (3) est basée sur une forme trapézoïdale, dont un côté parallèle est prolongé de chaque côté au moyen de deux bords de fixation (3.6) et sur l'autre côté parallèle de laquelle est disposée une nervure d'appui au moyen d'un canal de fixation (3.4) en contre-dépouille.

10. Profilé porteur selon l'une quelconque des revendications 1 à 9, **caractérisé en ce qu'**il est prévu, en plus du profilé creux intérieur (11a), un deuxième profilé creux intérieur métallique (11b), le moyen d'isolation (12) séparant électriquement le profilé creux extérieur (3) et le deuxième profilé creux intérieur (11b) l'un de l'autre, et le deuxième profilé creux intérieur (11b) étant reçu dans le profilé creux extérieur (3) au moyen du moyen d'isolation (12) et étant retenu au moyen du moyen d'isolation (12) dans toutes les directions transversalement par rapport au profilé porteur (13) par engagement par correspondance de forme dans le profilé creux extérieur (3).

11. Profilé porteur selon l'une quelconque des revendications 1 à 9, **caractérisé en ce qu'**un deuxième profilé creux intérieur métallique (14) et un deuxième moyen d'isolation (15) sont prévus, le deuxième moyen d'isolation (15) séparant électriquement le premier profilé creux intérieur (5) et le deuxième profilé creux intérieur (14) l'un de l'autre et le deuxième profilé creux intérieur (14) étant reçu dans le premier profilé creux intérieur (5) au moyen du deuxième moyen d'isolation (15) et étant retenu au moyen du deuxième moyen d'isolation (15) dans toutes les directions transversalement par rapport au profilé porteur (16) par engagement par correspondance de forme dans le premier profilé creux intérieur (5).

12. Profilé porteur selon l'une quelconque des revendications 1 à 11, **caractérisé en ce que** les modules PV (1) sont incorporés dans un tronçon (20 à 21) de modules PV (1, 19) branchés électriquement en série, le tronçon (20 à 21) étant connecté électriquement au niveau de l'une de ses extrémités électriques (20) à une extrémité longitudinale (5.5) du profilé creux intérieur (5).

13. Profilé porteur selon la revendication précédente, **caractérisé en ce que** le tronçon (20 à 21) est connecté électriquement au niveau de son autre extrémité (21) à l'un des pôles (24) d'un onduleur (22) et l'autre extrémité longitudinale (5.6) du profilé creux intérieur (5) est connectée électriquement à l'autre pôle (25) de l'onduleur (22).

14. Procédé de fabrication d'un profilé porteur selon l'une quelconque des revendications 1 à 9, **caractérisé en ce que** le moyen d'isolation (4) est d'abord disposé à l'extérieur sur le profilé creux intérieur (5) et ensuite le profilé creux intérieur (5) est introduit conjointement avec le moyen d'isolation (4) dans le profilé creux extérieur (3) ou le moyen d'isolation (4) est d'abord disposé à l'intérieur dans le profilé creux extérieur (3) et le profilé creux intérieur (5) est ensuite introduit dans le moyen d'isolation (4).
